# EUROPEAN PATENT SPECIFICATION

(11) **EP 4 060 534 B1**
(45) Date of publication and mention of the grant of the patent: **27.08.2025**
(21) Application number: 21209738.0
(22) Date of filing: 23.11.2021
(51) Int. Cl.: G06F 21/56, G06F 21/55

(54) **SYSTEMS AND METHODS FOR MODIFYING A MALICIOUS CODE DETECTION RULE**
SYSTEME UND VERFAHREN ZUR MODIFIZIERUNG EINER REGEL ZUR DETEKTION VON BÖSARTIGEM CODE
SYSTÈMES ET PROCÉDÉS DE MODIFICATION D'UNE RÈGLE DE DETECTION DE CODE MALVEILLANT

(30) Priority: 15.03.2021 RU 2021106654; 09.09.2021 US 202117447206
(43) Date of publication of application: 21.09.2022
(73) Proprietor: AO Kaspersky Lab, Moscow 125212 (RU)
(72) Inventor: LOPATIN, Evgeny I., 125212 Moscow (RU)
(74) Representative: Sloboshanin, Sergej

(56) References cited:
- EP-A1- 2 469 445
- EP-A1- 2 597 586

## Description

### CROSS-REFERENCE TO RELATED APPLICATION

The present application claims priority to Russian Application No. RU2021106654, filed March 15, 2021.

### TECHNICAL FIELD

The present disclosure relates to information security, and more specifically, to systems and methods for modifying a malicious code detection rule.

### BACKGROUND

Rapid development of computer technologies in the last decade and the widespread use of computer systems (personal computers, notebooks, tablets, smartphones, etc.) has resulted in such devices being used in various areas of activity and used to perform a large number of tasks (from Internet surfing to bank transfers and electronic document/record keeping). Similarly, with the growth of the amount of computer systems and software, the number of malicious programs is growing rapidly as well.

Currently, there are a very large number of types of malicious programs. Some malicious programs steal personal and confidential data from user devices (e.g. logins and passwords, banking information, electronic documents). Others build so-called botnets from user devices, which they then use to attack an outside computer system with the purpose of achieving a DDoS (Distributed Denial of Service) or to force passwords using the "brute force" method. Still others offer users paid content through intrusive advertising, texting to toll numbers, etc.

In order to detect applications containing malicious code, various technologies and methods are used, such as: statistical analysis, behavior analysis, analysis and comparison of databases of trusted applications and of applications containing malicious code, etc. Each technology involves the use of signatures or sets of conditions in order to detect the presence of malicious code. The above-mentioned technologies or methods have their advantages and disadvantages, which influence the occurrence of first and second type errors during detection of malicious applications (the so-called "detection rate") and the use of computing resources for detecting malicious applications (the so-called "performance"). In turn, malicious applications evolve based on the detection tools and become harder to detect.

Existing solutions are intended to analyze the efficiency of detection of malicious code using a technology; namely, a check of the correct functioning of the signatures used in the technology. For example, U.S. Patent No. 8,819,835B2 describes a system detecting incorrectly functioning signatures, using hidden signatures. Rules based on signature triggering statistics allow the signature functioning quality to be determined. If a signature works correctly, it is moved to the active state; otherwise, its use is canceled. Although such systems are partially successful in detecting an incorrectly working signature, they do not involve an analysis of the error caused by the use of the signature, or consider the possibility of a modification of the signature, which can affect the efficiency of detecting malicious code when using the above-mentioned signature.

Document EP 2469445 A1 refers to a system and a method for optimization of execution of anti-malware (AV) applications. A number of false-positive determinations by an AV system are reduced by correcting malware detection rules using correction coefficients. A number of malware objects detected by the AV system are increased by correction of ratings determined by the rules using correction coefficients. An automated testing of new detection rules used by the AV system is provided. The new rules having zero correction coefficients are added to the rules database and results of application of the new rules are analyzed and the rules are corrected or modified for further testing.

Document EP 2597586 A1 describes a system and a method for correcting antivirus records. In the method, during analysis of a software object for malware, an antivirus application retrieves from an antivirus database an antivirus record associated with the analyzed object, which identifies the object as malicious or clean. The application also checks if there is a correction for the antivirus record in an antivirus cache and use the correction for analysis of the software object. If no correction is found in the cache, the application checks correctness of the antivirus record with an antivirus server. The antivirus server uses statistical information about software objects collected from antivirus applications deployed on different computers to validate correctness of antivirus records. If the antivirus server provides a correction for the antivirus record, the application uses the provided correction for analysis of the software object for malware.

The present disclosure solves such problems.

### SUMMARY

Embodiments described herein substantially meet the aforementioned needs of the industry. In particular, embodiments overcome the existing drawbacks of the known approaches to rule-based malicious code detection.

Systems and methods for managing rules of detection of malicious code described herein include modifying a rule for the detection of malicious code. The technical result of the present disclosure ensures information security by maintaining malicious code detection rules in their current state, through detection of an error during the use of a malicious code detection rule and modification thereof.

The present invention is directed to subject-matter as disclosed by the appended claims.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 is a block diagram of a system for modifying a malicious code detection rule, according to an embodiment.
FIG. 2 is a flowchart of a method for modifying a malicious code detection rule, according to an embodiment.
FIG. 3 is a block diagram of a computer system configured to implement embodiments described herein.

### DETAILED DESCRIPTION OF THE DRAWINGS

During an analysis to determine the presence of malicious code, an anti-virus program can utilize malicious code detection rules. In general, a heuristic analyzer in an anti-virus program can utilize or include a certain set of rules. Such an analyzer uses rules in order to make a decision on the basis of the data received during the analysis as to whether the application being analyzed contains malicious code.

In an embodiment, a malicious code detection rule is a set of conditions. When the set of conditions is met, the object being analyzed is considered to contain malicious code. Depending on the object of the analysis, different types of conditions are selected to be used as the basis for building the rules. For example, malicious code in objects such as files can be detected using heuristics built on the basis of an analysis of a known file containing malicious code.

Conditions and attributes typical for files can be used as rule conditions. Example conditions and/or attributes can include: parts of the file in the form of file signature; unique strings contained in the command file; file type; file size; file structure. In addition, malicious code in files can be detected using a behavior signature. In the case of a behavior signature, example conditions and/or attributes can include the application's actions in relation to other programs, the application's actions in relation to the computer system's hardware, and the application's actions in relation to the operating system.

A message sent by email can also be the object of an analysis. In the case of an email, rules can include spam heuristics. In an embodiment, parameters and attributes typical for a message sent by email are used as the conditions; for example: message subject text; header of the message body text; language of the message text, etc.

Various malicious code detection rules can be used for the analysis of a single object. In using the rule, the probability of the presence of malicious code in the object being analyzed is determined. When the threshold probability value is exceeded, the object can be classified as containing malicious code. If the threshold probability value is not exceeded, the object can be classified as not containing malicious code. In either case, there is a probability of an error occurring. An error of first type or a false positive is considered to be a situation where an object which is actually not malicious is classified by the rule as an object containing malicious code. An error of second type is considered to be a situation where an object which is actually a malicious application is classified by the rule as an object not containing malicious code. Embodiments therefore detect the aforementioned first and second types of errors. Further, data related to the errors can be used to correct the relevant malicious code detection rules. Accordingly, embodiments of systems and methods for modifying a malicious code detection rule are described herein.

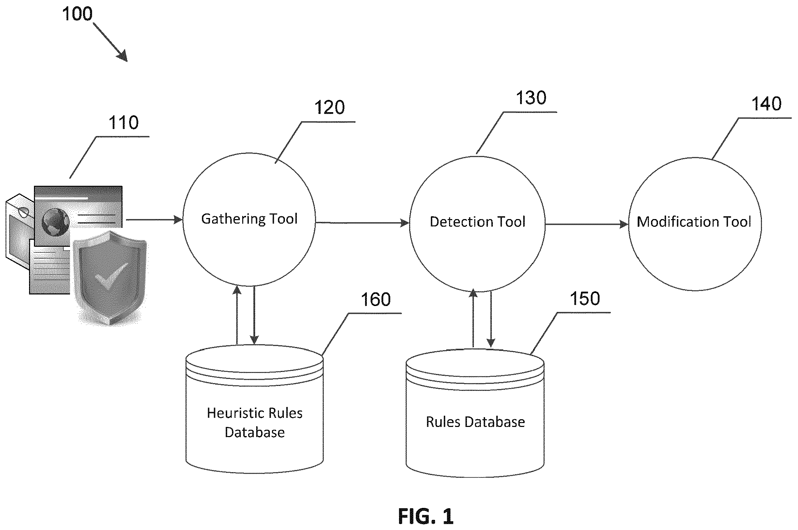

Referring to FIG. 1, a block diagram of a system 100 for modifying a malicious code detection rule is depicted, according to an embodiment. The system of FIG. 1 generally includes an anti-virus program 110, a gathering tool 120, a detection tool 130, a modification tool 140, a rules database 150, and a heuristic rules database 160.

Some of the subsystems of system 100 include various engines or tools, each of which is constructed, programmed, configured, or otherwise adapted, to autonomously carry out a function or set of functions. The term *engine* as used herein is defined as a real-world device, component, or arrangement of components implemented using hardware, such as by an application specific integrated circuit (ASIC) or field-programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

In an embodiment, anti-virus program 110 is configured to perform various searching and detecting of malicious code on user computer systems. For example, anti-virus program 110 is configured to apply malicious code detection rules from the heuristic rules database 160.

Gathering tool 120 configured to gather data related to the use of a malicious code detection rule from heuristic rules database 160. For example, gathering tool 120 is configured to perform gathering of data on the use of the malicious code detection rule during the time when anti-virus program 110 is conducting an analysis of objects using a malicious code detection rule from heuristic rules database 160. In certain embodiments, gathering tool 120 can gather the data as it exists on other components of system 100, or gathering tool 120 can itself make determinations related to the data.

In other embodiments, gathering tool 120 is configured to gather data prior to use of the malicious code detection rule. Gathering tool 120 is further configured to gather data after use of the malicious code detection rule. In embodiments, gathering tool 120 is further configured to compare data gathered before and after the malicious code detection rule is used.

In an embodiment, gathering tool 120 can determine and/or gather the time of the use of the malicious code detection rule.

In an embodiment, gathering tool 120 can determine and/or gather the date the malicious code detection rule was created.

In an embodiment, gathering tool 120 can determine and/or gather the result of the functioning of the malicious code detection rule, such as a decision to consider the object of the analysis as containing or not containing malicious code after the use of the malicious code detection rule.

In an embodiment, gathering tool 120 can determine and/or gather data related to the object of the analysis. For example, if the object is a file, the following data can be obtained: name, size, extension, checksum of a code area, and/or checksum of a section, etc.

In an embodiment, gathering tool 120 can determine and/or gather the settings of anti-virus program 110 which used the malicious code detection rule. For example, such settings can include emulation depth, time and date of the latest update of the anti-virus databases, frequency of updates of the anti-virus databases, and/or the set of files to be checked, etc.

In an embodiment, gathering tool 120 can determine and/or gather data related to the computer system's software, including the setting(s) for which anti-virus program 110 (which used the malicious code detection rule) is active. For example, such settings can include a list of installed programs, program name, data related to the program's developer, program version, and/or the time the program has been used, etc.

In an embodiment, gathering tool 120 can determine and/or gather data related to the computer system's hardware, including the setting(s) for which anti-virus program 110 (which used the malicious code detection rule) is active. For example, such settings can include a list of installed hardware, a processor model, a motherboard model, and/or a network card model, etc.

In an embodiment, gathering tool 120 can determine and/or gather data related to the security policy applied in the computer system where anti-virus program 110 (which used the malicious code detection rule) is active. For example, such data can include a list of users and their roles, software use authorizations, and/or hardware use authorizations, etc.

In an embodiment, gathering tool 120 can determine and/or gather data related to a response to the result of the use of the rule; for example, what the user does to the object of the analysis after malicious code detection rules are used.

In embodiments, gathering tool 120 is further configured to transfer data related to the use of the malicious code detection rule to detection tool 130.

Detection tool 130 is configured to detect whether an error is present when a malicious code detection rule is used, using error determination rules. In an embodiment, the detection of an error is done using error detection rules from rules database 150. In an embodiment, an error detection rule is a set of conditions. When the set of conditions is met, detection tool 130 determines an error presence ratio after a malicious code detection rule is used. A threshold value can be utilized when analyzing the error presence ratio. For example, when the threshold value is exceeded, an error is detected. In certain embodiments, the error presence ratio can be determined empirically or statistically, and can vary in accordance with detection of new objects of analysis containing malicious code.

The following set of conditions is an example of an error determination rule:
{result of the use of a malicious code detection rule - the object of the analysis contains malicious code; cancellation, by 10 different users, of the result of the malicious code detection rule use during analysis of the same object; security policy; the hardware and software of the computer systems on which the rule was canceled coincide for 80 percent; the time period the rule was used is 7 days}

When these conditions are met, a first type error presence ratio is considered equal to 9. In the case where the ratio's threshold value is a value of 9, it is considered that a first type error has been detected.

The following set of conditions are another example of an error determination rule:
{result of the use of a malicious code detection rule - the object of the analysis contains malicious code; during the use of the rule, the list of hardware decreased by one device; the object of the analysis was detected on 10 computer systems whose lists of hardware and software coincide for 80 percent; the list of hardware of the devices similarly decreased by one device, as mentioned earlier}

When these conditions are met, a first type error presence ratio is considered equal to 9. In the case where the ratio's threshold value is a value of 9, it is considered that a first type error has been detected.

The following set of conditions are another example of an error determination rule:
{result of the use of a malicious code detection rule - the object of the analysis does not contain malicious code; the object of the analysis is 80 percent similar to a previously known object of analysis containing malicious code; the date the malicious code detection rule was created exceeds 90 days; the settings of the anti-virus program that used the malicious code detection rule coincide for 90 percent}

When these conditions are met, a second type error presence ratio is considered equal to 9. In the case where the ratio's threshold value is a value of 9, it is considered that a second type error has been detected.

The following set of conditions are another example of an error determination rule:
{result of the use of a malicious code detection rule - the object of the analysis does not contain malicious code; the result of the use of a malicious code detection rule is confirmed on 10 computer systems; the object of analysis is removed from the archive of the objects containing malicious code}

When these conditions are met, a second type error presence ratio is considered equal to 9. In the case where the ratio's threshold value is a value of 9, it is considered that a second type error has been detected.

### Example 1

Example 1 includes a first type error determination rule for analysis of a file by a behavior signature. The following are the conditions:
- file 1 detected by behavior heuristics 1 contains a malicious code (a);
- in the last 2 hours, the number of users who added file 1 to the exceptions exceeded value 1 (b).
When these conditions are met, the first type error presence ratio is considered equal to Y, where Y = f(a, b). In this case, the second error presence ratio equals 9. In the case where the ratio's threshold value is determined as 9, it is considered that a second type error was detected.

### Example 2

Example 2 includes a first type error determination rule for analysis of a file by a behavior signature. The following conditions are used:
- a file detected by behavior heuristics 1 contains a malicious code (a);
- the behavior signature was released in test mode less than 2 hours ago (c).
When these conditions are met, the first type error presence ratio is considered equal to Y, where Y = f(a, c). In this case, the second error presence ratio equals 9. In the case where the ratio's threshold value is determined as 9, it is considered that a first type error was detected.

### Example 3

Example 3 includes a second type error determination rule for analysis of a file by behavior heuristics. The following conditions are used:
- file 2 checked by behavior heuristics 2 contains malicious code (p);
- file 2 checked by behavior heuristics 2 performs 3 actions with the operating system (OC) the same way as a known file containing malicious code (q);
- file 2 checked by behavior heuristics 2 uses a parent launch process the same way as a known file containing malicious code (r);
- the source of propagation of file 2 is the same as the source of propagation of the known file containing malicious code (s).
When these conditions are met, the second type error presence ratio is considered equal to Y, where Y = f(p, q, r, s). In this case, the first type error presence ratio equals 9. In the case where the ratio's threshold value is determined as 9, it is considered that a second type error has been detected.

If one of the conditions is not met, the error presence ratio decreases depending on the condition's influence on the error determination. If one of the conditions has a high influence on the error determination additionally, the error presence ratio increases. The condition's influence ratio can be calculated empirically, statistically, or using machine learning.

In embodiments, detection tool 130 is configured to transfer data related to the detected error during the use of a malicious code detection rule to modification tool 140.

Modification tool 140 is configured to make one or more changes to the malicious code detection rule during detection of an error when a malicious code detection rule is used.

For example, when a first type error is detected, the used malicious code detection rule is modified. In an embodiment, depending on the object of analysis, a change is made to the list of conditions of which the rule is composed; namely, their number is increased. For example, rule 1 contains 3 conditions. After rule 1 is used and an error of a first type is detected, rule 1 is changed by adding at least one additional condition. As a result, the modified rule 1 now contains 4 conditions, which will decrease the probability of occurrence of an error of first type.

In another embodiment, depending on the object of analysis, a change is made to the value of at least one of the conditions of which the rule is composed; namely, its value is reduced or decreased. For example, rule 1 contains 3 conditions; one condition had a value range of 10-20 units. After the rule is used and an error of a first type is detected, the rule is changed by reducing the condition's value range to 10 units. As a result, the modified rule 1 contains 3 conditions; one condition already has a value of 10, which will decrease the probability of occurrence of an error of first type.

When an error of second type is detected, the used malicious code detection rule can be modified. In an embodiment, depending on the object of analysis, a change is made to the list of conditions of which the rule is composed; namely, their number is decreased. For example, rule 3 contained 4 conditions. After the rule is used and an error of a second type is detected, rule 3 is changed by removing at least one additional condition of high importance. As a result, the modified rule 3 now contains 3 conditions, which will decrease the probability of occurrence of an error of second type.

In another embodiment, depending on the object of analysis, a change is made to the value of at least one of the conditions of which the rule is composed; namely, its value is increased or added. For example, rule 4 contained 3 conditions; one condition had a value range of 5-10 units. After rule 4 is used and an error of second type is detected, the rule is changed by increasing the condition's value to 10 units. As a result, the modified rule 4 contains 3 conditions; one condition already has a value of 10, which will decrease the probability of occurrence of an error of second type.

Rules database 150 is configured to store error determination rules. Heuristic rules database 160 is configured to store malicious code detection rules. Various types of databases can be used for storage and processing of data, namely: hierarchical ones (IMS, TDMS, System 2000), network-based ones (Cerebrum, Cronospro, DBVist), relational ones (DB2, Informix, Microsoft SQL Server), object-oriented ones (Jasmine, Versant, POET), object-relational ones (Oracle Database, PostgreSQL, FirstSQL/J), function-based ones, etc. Rules can be created using machine learning algorithms and automated processing of large data arrays.

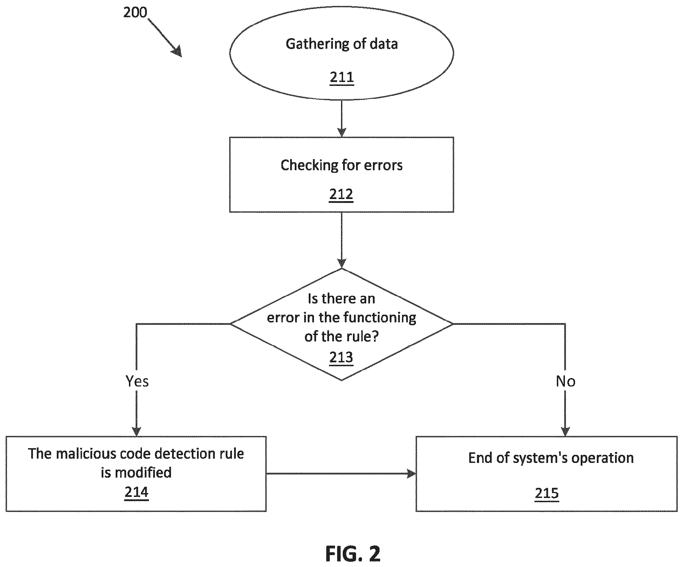

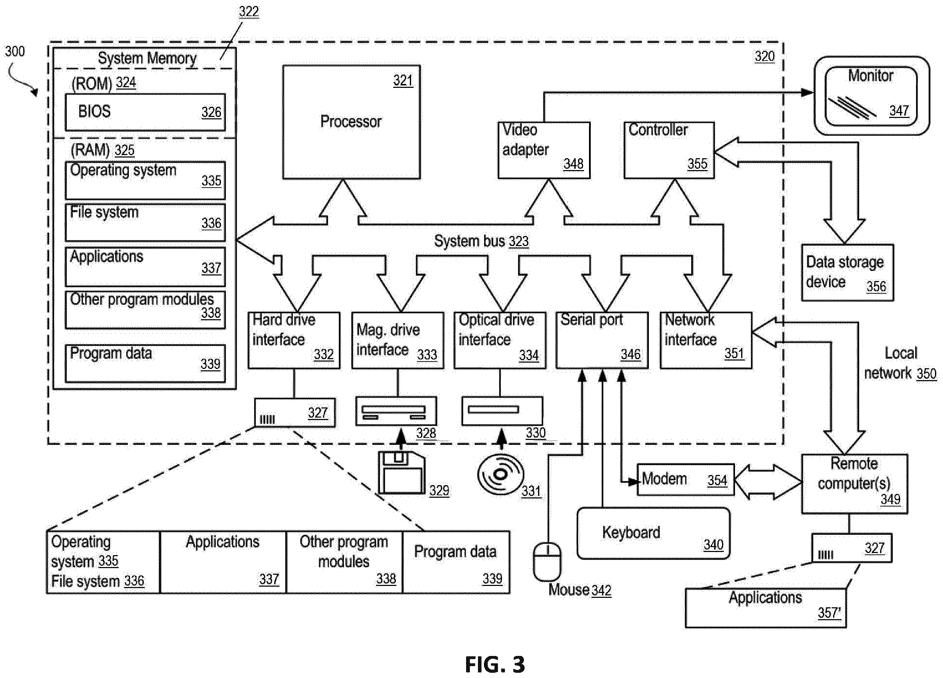

Referring to FIG. 2, a flowchart of a method 200 for modifying a malicious code detection rule is depicted, according to an embodiment. Embodiments of the method can be implemented with respect to the systems of FIGS 1 and 3. For example, reference is made with respect to the system of FIG. 1 in describing the method of FIG. 2.

At 211, gathering tool 120 gathers data on the use of a malicious code detection rule from heuristic rules database 160 and sends the gathered data to detection tool 130.

At 212 and 213, detection tool 130 checks whether any errors occurred during the use of a malicious code detection rule, using error detection rules from rules database 150. Then, detection tool 130 sends the data related to the detected error to modification tool 140.

If an error is detected in the operation of a malicious code detection rule at 214, modification tool 140 makes changes to the used malicious code detection rule. If there are no errors at 215, the system ends its operation.

Referring to FIG. 3, a diagram illustrating in greater detail a computer system 300 on which aspects of the disclosure as described herein may be implemented according to various embodiments is depicted.

The computer system 300 can comprise a computing device such as a personal computer 320 includes one or more processing units 321, a system memory 322 and a system bus 323, which contains various system components, including a memory connected with the one or more processing units 321. In various embodiments, processing units 321 can include multiple logical cores that are able to process information stored on computer readable media. The system bus 323 is realized as any bus structure known at the relevant technical level, containing, in turn, a bus memory or a bus memory controller, a peripheral bus and a local bus, which is able to interact with any other bus architecture. The system memory can include non-volatile memory such as Read-Only Memory (ROM) 324 or volatile memory such as Random Access Memory (RAM) 325. The Basic Input/Output System (BIOS) 326 contains basic procedures ensuring transfer of information between the elements of personal computer 320, for example, during the operating system boot using ROM 324.

Personal computer 320, in turn, has a hard drive 327 for data reading and writing, a magnetic disk drive 328 for reading and writing on removable magnetic disks 329, and an optical drive 330 for reading and writing on removable optical disks 331, such as CD-ROM, DVD-ROM and other optical media. The hard drive 327, the magnetic drive 328, and the optical drive 330 are connected with system bus 323 through a hard drive interface 332, a magnetic drive interface 333 and an optical drive interface 334, respectively. The drives and the corresponding computer information media represent energy-independent means for storage of computer instructions, data structures, program modules and other data on personal computer 320.

The system depicted includes hard drive 327, a removable magnetic drive 329 and a removable optical drive 330, but it should be understood that it is possible to use other types of computer media, capable of storing data in a computer-readable form (solid state drives, flash memory cards, digital disks, random-access memory (RAM), etc.), connected to system bus 323 through a controller 355.

The computer 320 comprises a file system 336, where the recorded operating system 335 is stored, as well as additional program applications 337, other program engines 338 and program data 339. The user can input commands and information into the personal computer 320 using input devices (keyboard 340, mouse 342). Other input devices (not shown) can also be used, such as: a microphone, a joystick, a game console, a scanner, etc. Such input devices are usually connected to the computer system 320 through a serial port 346, which, in turn, is connected to a system bus, but they can also be connected in a different way - for example, using a parallel port, a game port or a Universal Serial Bus (USB). The monitor 347 or another type of display device is also connected to system bus 323 through an interface, such as a video adapter 348. In addition to monitor 347, personal computer 320 can be equipped with other peripheral output devices (not shown), such as speakers, a printer, etc.

Personal computer 320 is able to work in a network environment; in this case, it uses a network connection with one or several other remote computers 349. Remote computer(s) 349 is (are) similar personal computers or servers, which have most or all of the above elements, noted earlier when describing the substance of personal computer 320 shown in FIG. 3. The computing network can also have other devices, such as routers, network stations, peering devices or other network nodes.

Network connections can constitute a Local Area Network (LAN) 350 and a World Area Network (WAN). Such networks are used in corporate computer networks or in corporate intranets, and usually have access to the Internet. In LAN or WAN networks, personal computer 320 is connected to the Local Area Network 350 through a network adapter or a network interface 351. When using networks, personal computer 320 can use a modem 354 or other means for connection to a world area network, such as the Internet. Modem 354, which is an internal or an external device, is connected to system bus 323 through serial port 346. It should be clarified that these network connections are only examples and do not necessarily reflect an exact network configuration, i.e. in reality there are other means of establishing a connection using technical means of communication between computers.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

## Claims

1. A system (100) for modifying a malicious code detection rule, the system comprising:
a rules database (150) configured to store a plurality of error detection rules, wherein each of the plurality of error detection rules includes a set of error conditions to detect an error;
a heuristic rules database (160) configured to store a plurality of malicious code detection rules, wherein each of the plurality of malicious code detection rules includes a set of detection conditions to detect malicious code;
computing hardware of at least one processor (321) and a memory (322) operably coupled to the at least one processor (321); and
instructions that, when executing on the computing hardware, cause the computing hardware to implement:
an anti-virus tool (110) configured to detect malicious code for an object under analysis based on at least one of the plurality of malicious code detection rules,
a gathering tool (120) configured to gather use data about the at least one of the plurality of malicious code detection rules, the use data including information about a security policy of the computing hardware,
a detection tool (130) configured to determine whether an error is present based on at least one of the plurality of error detection rules by:
calculating an error presence ratio as a function of satisfaction of the set of error conditions; and
comparing the error presence ratio against a threshold value, wherein, when the error presence ratio meets the threshold value, an error is detected, and
a modification tool (140) configured to change the at least one of the plurality of malicious code detection rules, wherein the modification tool (140) is configured to change the at least one of the plurality of malicious code detection rules by increasing or decreasing a number of conditions in the set of detection conditions for the at least one of the plurality of malicious code detection rules.

2. The system (100) of claim 1, wherein the error is a false positive in which the at least one of the plurality of malicious code detection rules incorrectly classifies an object that is not malicious as malicious.

3. The system (100) of claim 1, wherein the error is a false negative in which the at least one of the plurality of malicious code detection rules incorrectly classifies an object that is malicious as not malicious.

4. The system (100) of one of claims 1 to 3, wherein the use data further includes at least one of:
a time of use of the at least one of the plurality of malicious code detection rules;
a date the at least one of the plurality of malicious code detection rules was created;
a result of the at least one of the plurality of malicious code detection rules including whether the object is classified as malicious or not malicious;
information about the object under analysis;
a setting of the anti-virus tool (110) using the at least one of the plurality of malicious code detection rules;
information about the computing hardware; or
a response of a user to the result of the at least one of the plurality of malicious code detection rules.

5. The system (100) of one of claims 1 to 4, wherein the modification tool (140) is configured to change the at least one of the plurality of malicious code detection rules by changing a value of at least one of the conditions in the set of detection conditions.

6. The system (100) of claim 5, wherein the modification tool (140) is configured to change the at least one of the plurality of malicious code detection rules by changing the value according to a particular value range for the at least one of the detection conditions in the set of detection conditions.

7. A method (200) for modifying at least one of a plurality of malicious code detection rules for an object under analysis, wherein each of the plurality of malicious code detection rules includes a set of detection conditions to detect malicious code, the method comprising:
gathering (211) use data about the at least one of the plurality of malicious code detection rules, the use data including information about a security policy of computing hardware related to execution of the at least one of a plurality of malicious code detection rules;
determining (212) whether an error is present based on at least one of a plurality of error detection rules each of the plurality of error detection rules including a set of error conditions to detect an error, by:
calculating an error presence ratio as a function of satisfaction of the set of error conditions; and
comparing the error presence ratio against a threshold value, wherein, when the error presence ratio meets the threshold value, an error is detected; and
changing (214) the at least one of the plurality of malicious code detection rules, wherein the changing the at least one of the plurality of malicious code detection rules includes increasing or decreasing a number of conditions in the set of detection conditions for the at least one of the plurality of malicious code detection rules.

8. The method (200) of claim 7, further comprising:
presenting a rules database (150) configured to store the plurality of error detection rules; and
presenting a heuristic rules database (160) configured to store the plurality of malicious code detection rules.

9. The method (200) of claim 7 or 8, wherein the error is a false positive in which the at least one of the plurality of malicious code detection rules incorrectly classifies an object that is not malicious as malicious.

10. The method (200) of claim 7 or 8, wherein the error is a false negative in which the at least one of the plurality of malicious code detection rules incorrectly classifies an object that is malicious as not malicious.

11. The method (200) of one of claims 7 to 10, wherein the use data further includes at least one of:
a time of use of the at least one of the plurality of malicious code detection rules;
a date the at least one of the plurality of malicious code detection rules was created;
a result of the at least one of the plurality of malicious code detection rules including whether the object is classified as malicious or not malicious;
information about the object under analysis;
a setting of the anti-virus tool (110) using the at least one of the plurality of malicious code detection rules;
information about the computing hardware; or
a response of a user to the result of the at least one of the plurality of malicious code detection rules.

12. The method (200) of one of claims 7 to 11, wherein changing the at least one of the plurality of malicious code detection rules includes changing a value of at least one of the detection conditions in the set of detection conditions.

13. The method (200) of claim 12, wherein changing the at least one of the plurality of malicious code detection rules includes changing the value according to a particular value range for the at least one of the detection conditions in the set of detection conditions.

## Patentansprüche

1. System (100) zum Modifizieren einer Regel zur Detektion von bösartigem Code, wobei das System umfasst:
eine Datenbank für Regeln (150), die dazu konfiguriert ist, eine Vielzahl von Fehlerdetektionsregeln zu speichern, wobei jede der Vielzahl von Fehlerdetektionsregeln einen Satz von Fehlerbedingungen umfasst, um einen Fehler zu detektieren;
eine Datenbank für heuristische Regeln (160), die dazu konfiguriert ist, eine Vielzahl von Regeln zur Detektion von bösartigem Code zu speichern, wobei jede der Vielzahl von Regeln zur Detektion von bösartigem Code einen Satz von Detektionsbedingungen umfasst, um bösartigen Code zu detektieren;
eine Computerhardware von wenigstens einem Prozessor (321) und einem Speicher (322), der mit dem wenigstens einen Prozessor (321) funktionell gekoppelt ist; und
Instruktionen, die beim Ausführen auf der Computerhardware bewirken, dass die Computerhardware implementiert:
ein Anti-Virus-Tool (110), das dazu konfiguriert ist, basierend auf wenigstens einer der Vielzahl von Regeln zur Detektion von bösartigem Code für ein zu analysierendes Objekt bösartigen Code zu detektieren,
ein Erfassungs-Tool (120), das dazu konfiguriert ist, über die wenigstens eine der Vielzahl von Regeln zur Detektion von bösartigem Code Nutzungsdaten zu erfassen, wobei die Nutzungsdaten Informationen über eine Sicherheitsrichtlinie der Computerhardware umfassen,
ein Detektions-Tool (130), das dazu konfiguriert ist, basierend auf wenigstens einer der Vielzahl von Fehlerdetektionsregeln zu bestimmen, ob ein Fehler vorliegt, durch:
Berechnen eines Fehlerpräsenzverhältnisses als eine Funktion einer Erfüllung des Satzes von Fehlerbedingungen; und
Vergleichen des Fehlerpräsenzverhältnisses mit einem Schwellenwert, wobei, wenn das Fehlerpräsenzverhältnis den Schwellenwert erreicht, ein Fehler detektiert wird, und
ein Modifikations-Tool (140), das dazu konfiguriert ist, die wenigstens eine der Vielzahl von Regeln zur Detektion von bösartigem Code zu ändern, wobei das Modifikations-Tool (140) dazu konfiguriert ist, durch Erhöhen oder Verringern einer Anzahl von Bedingungen in dem Satz von Detektionsbedingungen für die wenigstens eine der Vielzahl von Regeln zur Detektion von bösartigem Code die wenigstens eine der Vielzahl von Regeln zur Detektion von bösartigem Code zu ändern.

2. System (100) nach Anspruch 1, wobei der Fehler ein falsches Positiv ist, bei dem die wenigstens eine der Vielzahl von Regeln zur Detektion von bösartigem Code ein Objekt, das nicht bösartig ist, fälschlicherweise als bösartig klassifiziert.

3. System (100) nach Anspruch 1, wobei der Fehler ein falsches Negativ ist, bei dem die wenigstens eine der Vielzahl von Regeln zur Detektion von bösartigem Code ein Objekt, das bösartig ist, fälschlicherweise als nicht bösartig klassifiziert.

4. System (100) nach einem der Ansprüche 1 bis 3, wobei die Nutzungsdaten ferner wenigstens eines umfassen von:
einer Nutzungszeit der wenigstens einen der Vielzahl von Regeln zur Detektion von bösartigem Code;
einem Datum, an dem die wenigstens eine der Vielzahl von Regeln zur Detektion von bösartigem Code geschaffen wurden;
einem Ergebnis der wenigstens einen der Vielzahl von Regeln zur Detektion von bösartigem Code, das umfasst, ob das Objekt als bösartig oder nicht bösartig klassifiziert ist;
von Informationen über das zu analysierende Objekt;
einer Einstellung des Anti-Virus-Tools (110), das die wenigstens eine der Vielzahl von Regeln zur Detektion von bösartigem Code nutzt;
von Informationen über die Computerhardware; oder
einer Antwort eines Nutzers auf das Ergebnis der wenigstens einen der Vielzahl von Regeln zur Detektion von bösartigem Code.

5. System (100) nach einem der Ansprüche 1 bis 4, wobei das Modifikations-Tool (140) dazu konfiguriert ist, durch Ändern eines Werts von wenigstens einer der Bedingungen in dem Satz von Detektionsbedingungen die wenigstens eine der Vielzahl von Regeln zur Detektion von bösartigem Code zu ändern.

6. System (100) nach Anspruch 5, wobei das Modifikations-Tool (140) dazu konfiguriert ist, durch Ändern des Werts gemäß einem bestimmten Wertebereich für die wenigstens eine der Detektionsbedingungen in dem Satz von Detektionsbedingungen die wenigstens eine der Vielzahl von Regeln zur Detektion von bösartigem Code zu ändern.

7. Verfahren (200) zum Modifizieren wenigstens einer von einer Vielzahl von Regeln zur Detektion von bösartigem Code für ein zu analysierendes Objekt, wobei jede der Vielzahl von Regeln zur Detektion von bösartigem Code einen Satz von Detektionsbedingungen umfasst. um bösartigen Code zu detektieren, wobei das Verfahren umfasst:
Erfassen (211) von Nutzungsdaten über die wenigstens eine der Vielzahl von Regeln zur Detektion von bösartigem Code, wobei die Nutzungsdaten Informationen über eine Sicherheitsrichtlinie von Computerhardware umfasst, die auf eine Ausführung der wenigstens einen von einer Vielzahl von Regeln zur Detektion von bösartigem Code bezogen sind;
Bestimmen (212), basierend auf wenigstens einer von einer Vielzahl von Fehlerdetektionsregeln, ob ein Fehler vorliegt, wobei jede der Vielzahl von Fehlerdetektionsregeln einen Satz von Fehlerbedingungen umfasst, um einen Fehler zu detektieren, durch:
Berechnen eines Fehlerpräsenzverhältnisses als eine Funktion einer Erfüllung des Satzes von Fehlerbedingungen; und
Vergleichen des Fehlerpräsenzverhältnisses mit einem Schwellenwert, wobei, wenn das Fehlerpräsenzverhältnis den Schwellenwert erreicht, ein Fehler detektiert wird; und
Ändern (214) der wenigstens einen der Vielzahl von Regeln zur Detektion von bösartigem Code, wobei das Ändern der wenigstens einen der Vielzahl von Regeln zur Detektion von bösartigem Code ein Erhöhen oder Verringern einer Anzahl von Bedingungen in dem Satz von Detektionsbedingungen für die wenigstens eine der Vielzahl von Regeln zur Detektion von bösartigem Code umfasst.

8. Verfahren (200) nach Anspruch 7, ferner umfassend:
Präsentieren einer Datenbank für Regeln (150), die dazu konfiguriert ist, die Vielzahl von Fehlerdetektionsregeln zu speichern; und
Präsentieren einer Datenbank für heuristische Regeln (160), die dazu konfiguriert ist, die Vielzahl von Regeln zur Detektion von bösartigem Code zu speichern.

9. Verfahren (200) nach Anspruch 7 oder 8, wobei der Fehler ein falsches Positiv ist, bei dem die wenigstens eine der Vielzahl von Regeln zur Detektion von bösartigem Code ein Objekt, das nicht bösartig ist, fälschlicherweise als bösartig klassifiziert.

10. Verfahren (200) nach Anspruch 7 oder 8, wobei der Fehler ein falsches Negativ ist, bei dem die wenigstens eine der Vielzahl von Regeln zur Detektion von bösartigem Code ein Objekt, das bösartig ist, fälschlicherweise als nicht bösartig klassifiziert.

11. Verfahren (200) nach einem der Ansprüche 7 bis 10, wobei die Nutzungsdaten ferner wenigstens eines umfassen von:
einer Nutzungszeit der wenigstens einen der Vielzahl von Regeln zur Detektion von bösartigem Code;
einem Datum, an dem die wenigstens eine der Vielzahl von Regeln zur Detektion von bösartigem Code geschaffen wurden;
einem Ergebnis der wenigstens einen der Vielzahl von Regeln zur Detektion von bösartigem Code, das umfasst, ob das Objekt als bösartig oder nicht bösartig klassifiziert ist;
von Informationen über das zu analysierende Objekt;
einer Einstellung des Anti-Virus-Tools (110), das die wenigstens eine der Vielzahl von Regeln zur Detektion von bösartigem Code nutzt;
von Informationen über die Computerhardware; oder
einer Antwort eines Nutzers auf das Ergebnis der wenigstens einen der Vielzahl von Regeln zur Detektion von bösartigem Code.

12. Verfahren (200) nach einem der Ansprüche 7 bis 11, wobei das Ändern der wenigstens einen der Vielzahl von Regeln zur Detektion von bösartigem Code ein Ändern eines Werts von wenigstens einer der Detektionsbedingungen in dem Satz von Detektionsbedingungen umfasst.

13. Verfahren (200) nach Anspruch 12, wobei das Ändern der wenigstens einen der Vielzahl von Regeln zur Detektion von bösartigem Code ein Ändern des Werts gemäß einem bestimmten Wertebereich für die wenigstens eine der Detektionsbedingungen in dem Satz von Detektionsbedingungen umfasst.

## Revendications

1. Système (100) pour la modification d'une règle de détection de code malveillant, le système comprenant :
une base de données de règles (150) configurée pour stocker une pluralité de règles de détection d'erreur, dans lequel chacune de la pluralité de règles de détection d'erreur inclut un ensemble de conditions d'erreur pour détecter une erreur ;
une base de données de règles heuristiques (160) configurée pour stocker une pluralité de règles de détection de code malveillant, dans lequel chacune de la pluralité de règles de détection de code malveillant inclut un ensemble de conditions de détection pour détecter un code malveillant ;
un matériel informatique d'au moins un processeur (321) et d'une mémoire (322) couplée de manière opérationnelle à l'au moins un processeur (321) ; et
des instructions qui, lors de leur exécution sur le matériel informatique, amènent le matériel informatique à mettre en œuvre :
un outil antivirus (110) configuré pour détecter un code malveillant pour un objet en cours d'analyse sur la base d'au moins l'une de la pluralité de règles de détection de code malveillant,
un outil de collecte (120) configuré pour collecter des données d'utilisation concernant l'au moins une de la pluralité de règles de détection de code malveillant, les données d'utilisation incluant des informations concernant une politique de sécurité du matériel informatique,
un outil de détection (130) configuré pour déterminer si une erreur est présente sur la base d'au moins l'une de la pluralité de règles de détection d'erreur par :
le calcul d'un taux de présence d'erreur en fonction de la satisfaction de l'ensemble de conditions d'erreur ; et
la comparaison du taux de présence d'erreur avec une valeur seuil, dans lequel, lorsque le taux de présence d'erreur atteint la valeur seuil, une erreur est détectée, et
un outil de modification (140) configuré pour changer l'au moins une de la pluralité de règles de détection de code malveillant, dans lequel l'outil de modification (140) est configuré pour changer l'au moins une de la pluralité de règles de détection de code malveillant par l'augmentation ou la diminution d'un nombre de conditions dans l'ensemble de conditions de détection pour l'au moins une de la pluralité de règles de détection de code malveillant.

2. Système (100) selon la revendication 1, dans lequel l'erreur est un faux positif dans lequel l'au moins une de la pluralité de règles de détection de code malveillant classe de manière incorrecte un objet qui est non malveillant comme malveillant.

3. Système (100) selon la revendication 1, dans lequel l'erreur est un faux négatif dans lequel l'au moins une de la pluralité de règles de détection de code malveillant classe de manière incorrecte un objet qui est malveillant comme non malveillant.

4. Système (100) selon l'une des revendications 1 à 3, dans lequel les données d'utilisation incluent en outre au moins l'un parmi :
un temps d'utilisation de l'au moins une de la pluralité de règles de détection de code malveillant ;
une date à laquelle l'au moins une de la pluralité de règles de détection de code malveillant a été créée ;
un résultat de l'au moins une de la pluralité de règles de détection de code malveillant incluant si l'objet est classé comme malveillant ou non malveillant ;
des informations concernant l'objet en cours d'analyse ;
un réglage de l'outil antivirus (110) à l'aide de l'au moins une de la pluralité de règles de détection de code malveillant ;
des informations concernant le matériel informatique ; ou
une réponse d'un utilisateur au résultat de l'au moins une de la pluralité de règles de détection de code malveillant.

5. Système (100) selon l'une des revendications 1 à 4, dans lequel l'outil de modification (140) est configuré pour changer l'au moins une de la pluralité de règles de détection de code malveillant par le changement d'une valeur d'au moins l'une des conditions dans l'ensemble de conditions de détection.

6. Système (100) selon la revendication 5, dans lequel l'outil de modification (140) est configuré pour changer l'au moins une de la pluralité de règles de détection de code malveillant par le changement de la valeur selon une plage de valeurs particulière pour l'au moins l'une des conditions de détection dans l'ensemble de conditions de détection.

7. Procédé (200) pour la modification d'au moins l'une d'une pluralité de règles de détection de code malveillant pour un objet en cours d'analyse, dans lequel chacune de la pluralité de règles de détection de code malveillant inclut un ensemble de conditions de détection pour détecter un code malveillant, le procédé comprenant :
la collecte (211) de données d'utilisation concernant l'au moins une de la pluralité de règles de détection de code malveillant, les données d'utilisation incluant des informations concernant une politique de sécurité du matériel informatique relative à l'exécution de l'au moins une d'une pluralité de règles de détection de code malveillant ;
la détermination (212) de si une erreur est présente sur la base d'au moins l'une d'une pluralité de règles de détection d'erreur, chacune de la pluralité de règles de détection d'erreur incluant un ensemble de conditions d'erreur pour détecter une erreur, par :
le calcul d'un taux de présence d'erreur en fonction de la satisfaction de l'ensemble de conditions d'erreur ; et
la comparaison du taux de présence d'erreur avec une valeur seuil, dans lequel, lorsque le taux de présence d'erreur atteint la valeur seuil, une erreur est détectée ; et
le changement (214) de l'au moins une de la pluralité de règles de détection de code malveillant, dans lequel le changement de l'au moins une de la pluralité de règles de détection de code malveillant inclut l'augmentation ou la diminution d'un nombre de conditions dans l'ensemble de conditions de détection pour l'au moins une de la pluralité de règles de détection de code malveillant.

8. Procédé (200) selon la revendication 7, comprenant en outre :
la présentation d'une base de données de règles (150) configurée pour stocker la pluralité de règles de détection d'erreur ; et
la présentation d'une base de données de règles heuristiques (160) configurée pour stocker la pluralité de règles de détection de code malveillant.

9. Procédé (200) selon la revendication 7 ou 8, dans lequel l'erreur est un faux positif dans lequel l'au moins une de la pluralité de règles de détection de code malveillant classe de manière incorrecte un objet qui est non malveillant comme malveillant.

10. Procédé (200) selon la revendication 7 ou 8, dans lequel l'erreur est un faux négatif dans lequel l'au moins une de la pluralité de règles de détection de code malveillant classe de manière incorrecte un objet qui est malveillant comme non malveillant.

11. Procédé (200) selon l'une des revendications 7 à 10, dans lequel les données d'utilisation incluent en outre au moins l'un parmi :
un temps d'utilisation de l'au moins une de la pluralité de règles de détection de code malveillant ;
une date à laquelle l'au moins une de la pluralité de règles de détection de code malveillant a été créée ;
un résultat de l'au moins une de la pluralité de règles de détection de code malveillant incluant si l'objet est classé comme malveillant ou non malveillant ;
des informations concernant l'objet en cours d'analyse ;
un réglage de l'outil antivirus (110) à l'aide de l'au moins une de la pluralité de règles de détection de code malveillant ;
des informations concernant le matériel informatique ; ou
une réponse d'un utilisateur au résultat de l'au moins une de la pluralité de règles de détection de code malveillant.

12. Procédé (200) selon l'une des revendications 7 à 11, dans lequel le changement de l'au moins une de la pluralité de règles de détection de code malveillant inclut le changement d'une valeur d'au moins l'une des conditions de détection dans l'ensemble de conditions de détection.

13. Procédé (200) selon la revendication 12, dans lequel le changement de l'au moins une de la pluralité de règles de détection de code malveillant inclut le changement de la valeur selon une plage de valeurs particulière pour l'au moins l'une des conditions de détection dans l'ensemble de conditions de détection.
